# EUROPEAN PATENT SPECIFICATION

(11) **EP 2 530 311 B1**
(45) Date of publication and mention of the grant of the patent: **03.09.2014**
(21) Application number: 12004203.1
(22) Date of filing: 31.05.2012
(51) Int. Cl.: F03D 11/00, F03D 1/00, B60B 15/00, B60B 19/00

(54) **Inspection trolley**
Inspektionswagen
Chariot d'inspection

(30) Priority: 01.06.2011 ES 201100618
(43) Date of publication of application: 05.12.2012
(73) Proprietor: Gamesa Innovation & Technology, S.L., 31621 Sarriguren (ES)
(72) Inventor: Arkaitz, Ares Boo, 48170 Zamudio - Bizkaia (ES); Gaminde Larreta, Beinat, 48170 Zamudio - Bizkaia (ES)

(56) References cited:
- WO-A2-01/74652
- US-A- 6 046 565

## Description

### Object of the invention

This invention is related to the inspection of large-dimensioned structures and, more specifically, to tools used in inspection and maintenance of wind turbine blades.

### Back-ground of the invention

The development of new wind turbines has resulted in an increase in their size and power. Large wind turbines enable more capacity to be installed at the same site and reduce the visual impact of a farm consisting of several wind turbines.

The increase of generated power is linked directly to the dimensions of the wind turbine rotor and the consequential lengthening of the wind turbine blades. This lengthening of the blades entails an increase in their rigidity, which usually implies the use of an increased number of carbon fiber based laminates in blade production.

Blades represent the most critical element of a wind turbine and thus undergo preventive and corrective inspections. Solutions are therefore required to automate their maintenance.

Fiber lamination processes are complex and present difficulties in securing a quality final product, resulting in the need to inspect the final product to detect irregularities or weak points in the surfaces at the different spots on the blade that could influence its behavior.

The current State of the Art includes automatic or semiautomatic large surface inspection devices equipped with navigation systems and geometrical information gatherers for the inspected surface. As a general rule, these devices incorporate tires and gripping elements, which allow them to move through areas having curvatures of various sorts.

Such an inspection trolley is known from US-A-6, 046, 565.

However, devices of this type are unsuitable for inspecting the inside of wind turbine blades, since the structural beam of the blade is fiberglass embedded in resins, which, following the curing process, has a smooth, hard surface making traction difficult for the inspection device to gain. Additionally, the flexion and torsion of the blades installed on a machine, together with the frequent presence of oil, calls for the inspection device to move over a surface at an incline of up to 15° when advancing and 10° during perpendicular movements, consequently encumbering inspection tasks significantly.

Further, there are blades equipped with balancing blocks mounted inside the beam on a spot closest to the blade tip with a view to offsetting their inertia, and thus, in order to conduct a full inspection of the inside the blade beam, the inspection device must be capable of overcoming these obstacles and maneuvering in zones of reduced dimensions.

Finally, the difficulty in detecting possible imperfections or weak points on the laminated surfaces requires the inspection device to have a visual inspection tool capable of capturing images whose sharpness, illumination and resolution suffice so as to enable detection of defects and/or fiber alignment changes along the internal surface of the blade beam.

### Description of the invention

This invention describes an inspection device for the inside of wind turbine blades as a solution to the aforementioned problems of traction and inspection.

The inspection device comprises a semiautomatic trolley fitted with wheels having metal tips, illumination system and a visual inspection system such as a high resolution axial camera adjustable for orientation and zoom.

The inspection device described in this invention is of small dimensions, since it must be capable of inspecting the entire internal surface of the blade, which thus reduces its dimensions to a size that allows it to approach the blade tip.

The wheels on the inspection trolley are detachable and modular, which thus permit full wheel replacement or partial replacement of any of its components, such as the metal tips, which, in order to work effectively, must be very sharp and are thus susceptible to wear due to rubbing against the fiber on the traction surface.

In addition, the inspection device is equipped with a data transfer cable for sending real time information to a storage and analysis system from which the device is controlled. The storage system comprises a display screen and the maneuver controls for the inspection trolley.

### Brief description of the drawings

Figure 1 shows an embodiment of an inspection trolley according to the invention.

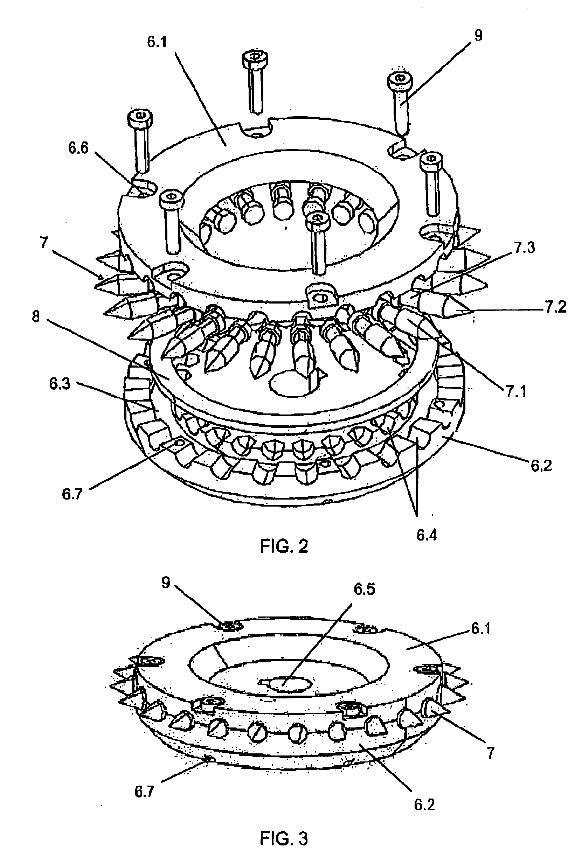

Figure 2 provides an exploded view of a modular tipped wheel for the inspection trolley stipulated in the invention.
Figure 3 provides a view of a modular tipped wheel for the inspection trolley stipulated in the invention.

### Description of the preferential embodiment

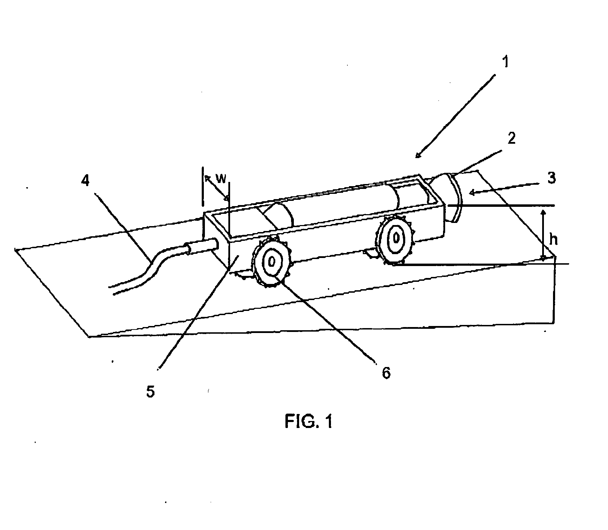

The inspection trolley (1) of this invention comprises, according to the preferential embodiment in figure 1, a bedplate (5) onto which is mounted an illumination system (2), a visual inspection system (3) fitted with a camera and a data transfer system (4) connecting the inspection trolley (1) with a storage and analysis device (not represented), equipped with a display screen.

Given that the inspection trolley must inspect the entire internal surface of the blade, and given that the dimensions inside the wind turbine blade diminish as we move towards the blade tip, the inspection trolley (1) is of small dimensions.

As mentioned above, there are wind turbine blades furnished with balancing blocks to offset inertia. These blocks are located close to the blade tip. In this regard, the dimensions of the inspection trolley in terms of width (w) and height (h), are 30%, or a lesser percentage, smaller than the dimensions (in height and width) of the balancing blocks located close to the blade tip.

Further, the camera (not represented) for the visual device has a diameter of at least 10% less than the diameter of the orifices in the balancing blocks for the blades, so that in blades with balancing blocks, the camera would cross the block through the orifices, enabling it to inspect the distance between the block and the blade tip.

The bedplate (5) of the inspection trolley (1) comprises some transmission shafts fitted with some detachable metal wheels (6) fitted with tips (7).

These wheels comprise two modular circular bodies (6.1, 6.2) that complement one another. Each one of the modular bodies (6.1, 6.2) has, at a spot close to its perimeter, a circular groove (6.3) as well as some cross recesses (6.4) to this groove (6.3) laid out to flow towards the center of the modular body (6.1, 6.2).

Likewise, at least one of the circular bodies (6.1, 6.2) determines a central opening (6.5) whose form corresponds to the form of the end of the transmission shaft onto which the modular wheel (6) is coupled.

The tips (7) on the modular wheels (6) are preferable made of metal, other material could be used so long as their hardness suffices to grip a smooth and rigid surface (10) similar to the inside of a fiberglass blade and has the same behavior with regard to wear. The tips (7) are characterized with a cylindrical form (7.1) ending at a point (7.2) in the shape of a diamond. The cylinder, near the base, has a circular recess (7.3) whose height corresponds to the width of the circular groove (6.3) on the modular bodies (6.1, 6.2) of the wheel (6).

Additionally, the modular metal wheels (6) contain a metal ring (8) in correspondence with the circular groove (6.3) on the constituent modular bodies (6.1, 6.2). This ring (8) is used to secure the metal tips (7) to the modular bodies (6.1, 6.2), guaranteeing that when the metal wheel (6) tractions across a smooth and rigid surface (10), the tips (7) do not move in their housing.

The coupling between the different parts (6.1, 6.2, 7, 8) constituting the metal modular wheel (6) is made by conventional means such as bolts (9); thus one of the modular bodies (6.1) shall have some orifices (6.6) for their insertion, while the other modular body (6.2) shall have a threaded element (6.7) for fastening.

## Claims

1. Inspection trolley, of the sort employed for conducting inspection tasks inside the blades of a wind turbine, comprising a bedplate (5) fitted with some transmission shafts incorporating modular metal wheels (6) with tips (7), **characterized in that** the modular metal wheels (6) comprise two circular modular bodies (6.1, 6-2) that complement each other and which determine, in the area close to its perimeter, a circular groove (6.3), as well as some recesses (6.4) transverse to this groove (6.3) and positioned so that they flow towards the central modular body (6.1, 6.2).

2. Inspection trolley according to claim 1, **characterized in that** the modular metal wheels (6) contain a metal ring (8) in correspondence with the circular groove (6.3) on the constituent modular bodies (6.1, 6.2).

3. Inspection trolley, according to the claims above, **characterized in that** each of the tips (7) on the modular wheels are made of metal and determine a cylindrical form (7.1) that has, close to its base, a circular recess (7.3) whose height corresponds to the width of the circular groove (63) on the modular bodies (6.1, 6.2) of the wheel (6) and which ends in a tip (7.2) in the form of a diamond.

4. Inspection trolley according to the previous claims **characterized in that** at least one of the modular bodies (6.1 or 6.2) on the modular wheels (6) determine the central opening (6.5), whose form corresponds to the form at the end of the transmission shaft of the trolley (1),

5. Inspection trolley according to claim 1, **characterized in that** it is also equipped with an illumination system (2), a visual inspection system (3) and a data transfer system (4) connecting it to a storage and analysis device equipped with a display screen.

6. Inspection trolley according to claim 1, **characterized by** its small dimensions, namely in terms of width (w) and height (h),
which are 30%, or a lesser percentage, smaller than the dimensions in height and width of a balancing block located inside the wind turbine blade close to the blade tip.

## Patentansprüche

1. Inspektionswagen, von der Art, wie sie für Inspektionsarbeiten im Inneren der Rotorblätter einer Windenergieanlage verwendet werden, bestehend aus einer Grundplatte (5) mit einigen Kardanwellen, an denen modulare Metallrädern (6) mit Spitzen (7) montiert sind, wobei die modularen Metallräder (6) aus zwei kreisförmigen Modularkörpern (6.1, 6.2) bestehen, die sich gegenseitig ergänzen und die in dem Bereich nahe ihres Umfangs eine kreisförmige Kerbe (6.3) sowie quer zu dieser Kerbe (6.3.) einige Einbuchtungen haben (6.4), die so positioniert sind, dass sie zum mittleren Modularkörper (6.1, 6.2) fließen.

2. Inspektionswagen gemäß Anspruch 1, der sich dadurch auszeichnet, dass die modularen Metallräder (6) einen Metallring (8) in Übereinstimmung mit der kreisförmigen Kerbe (6.3) auf den jeweiligen Modularkörpern (6.1, 6.2) haben.

3. Inspektionswagen gemäß den obigen Ansprüchen, der sich dadurch auszeichnet, dass jede der Spitzen (7) auf den modularen Rädern aus Metall hergestellt ist und eine zylindrische Form (7.1) aufweist, die dicht am Fuß eine kreisförmige Vertiefung hat (7.3), deren Höhe der Breite der kreisförmigen Kerbe (6.3) in den Modularkörpern (6.1, 6.2) auf dem Rad (6) entspricht und die an der Spitze (7.2) in Form eines Diamanten endet.

4. Inspektionswagen gemäß den obigen Ansprüchen, der sich dadurch auszeichnet, dass mindestens einer der Modularkörper (6.1 oder 6.2) an den modularen Rädern (6) die mittlere Öffnung (6.5) bestimmt, deren Form der Form am Ende der Kardanwelle des Wagens (1) entspricht.

5. Inspektionswagen gemäß Anspruch 1, der sich dadurch auszeichnet, dass er auch mit einem Beleuchtungssystem (2), einem optischen Inspektionssystem (3) und einem Datenübertragungssystem (4) ausgestattet ist, das an ein Speicher- und Analysegerät mit einem Bildschirm angeschlossen ist.

6. Inspektionswagen gemäß Anspruch 1, der sich durch seine kleinen Abmessungen auszeichnet, insbesondere bezüglich seiner Breite (w) und Höhe (h), die 30% oder zu einem geringeren Prozentsatz kleiner sind als die Höhen- und Breitenabmessungen eines Auswuchtgewichts im Inneren des Rotorblatts der Windenergieanlage in der Nähe der Blattspitze.

## Revendications

1. Chariot d'inspection, du type de ceux employés pour réaliser des tâches d'inspection à l'intérieur des pales d'une éolienne, comprenant une console d'appui (5) pourvue d'arbres de transmission incorporant des roues métalliques modulaires (6) avec des embouts (7), **caractérisé en ce que** les roues métalliques modulaires (6) comprennent deux corps modulaires circulaires (6.1, 6.2) qui sont complémentaires et qui définissent, dans la zone proche de leur circonférence, une rainure circulaire (6.3), ainsi que plusieurs renfoncements (6.4) transversaux par rapport à cette rainure (6.3) et positionnés de façon à ce qu'ils s'étendent vers le corps modulaire central (6.1, 6.2).

2. Chariot d'inspection selon la revendication 1, **caractérisé en ce que** les roues métalliques modulaires (6) contiennent un anneau métallique (8) correspondant à la rainure circulaire (6.3) sur les corps modulaires constitutifs (6.1, 6.2).

3. Chariot d'inspection selon la revendication ci-dessus, **caractérisé en ce que** chacun des embouts (7) sur les roues modulaires est fabriqué en métal et définit un élément cylindrique (7.1) qui possède, près de sa base, un renfoncement circulaire (7.3) dont la hauteur correspond à la largeur de la rainure circulaire (6.3) sur les corps modulaires (6.1, 6.2) de la roue (6) et se terminant par un embout (7.2) en forme de diamant.

4. Chariot d'inspection selon la revendication précédente, **caractérisé en ce qu'**au moins l'un des corps modulaires (6.1 ou 6.2) sur les roues modulaires (6) détermine l'ouverture centrale (6.5), dont la forme correspond à la forme de l'extrémité de l'arbre de transmission du chariot (1)

5. Chariot d'inspection selon la revendication 1, **caractérisé en ce qu'**il est également équipé d'un système d'éclairage (2), d'un système d'inspection visuelle (3) et d'un système de transfert de données (4) le reliant à un dispositif de stockage et d'analyse équipé d'un écran d'affichage.

6. Chariot d'inspection selon la revendication 1 **caractérisé par** ses faibles dimensions, précisément en termes de largeur (w) et hauteur (h), qui sont plus faibles de 30 %, ou d'un moindre pourcentage, que les dimensions en hauteur et largeur d'une cale d'équilibrage située à l'intérieur de la pale de l'éolienne, près du bout de pale.
